# EUROPEAN PATENT APPLICATION

(11) **EP 1 389 882 A1**
(43) Date of publication of application: **18.02.2004**
(21) Application number: 03255105.3
(22) Date of filing: 18.08.2003
(51) Int. Cl.: H04Q 7/22, H04N 1/00, G06K 15/00

(54) **Apparatus having a printing function**

(30) Priority: 16.08.2002 KR 2002048397
(71) Applicant: SAMSUNG ELECTRONICS CO., LTD., Suwon-City, Kyungki-do (KR)
(72) Inventor: Song, Bong-Seog, Suwon-si, Gyeonggi-do (KR)
(74) Representative: Geary, Stuart Lloyd

(57) **Abstract**

Managing short messages in a facsimile machine (100) or a multifunctional device having a short message service by setting up a call to a short message service centre (120), receiving SMS short messages from the short message service centre (120), via a modem (15), and printing the received SMS short messages, so that the SMS messages can be managed in a document format. Further, the received SMS short messages are displayed on a display window, and selectively stored, printed, and deleted.

## Description

The present invention relates to an apparatus having a printing function comprising control means and printing means.

A short message service (SMS) is a kind of wireless data communication service, which transmits short messages using a mobile phone system. Currently, SMS use is increasing rapidly.

Recently, there have been intensive studies into the application of an SMS to fixed networks, such as a public switched telephone network (PSTN) or an integrated service digital network (ISDN), as well as to mobile networks. As a result, to provide an SMS via a wired network, ES 201 912, which is a communication protocol stipulating the characteristics of the transmissions required between a wired network SMS centre (SMSC) and an SMS terminal (SMTE), has been established by the European Telecommunication Standard Institute (ETSI).

However, in a wired telephone having an SMS function, SMS messages received from an SMSC can be read in a display window attached to the telephone but the received short messages cannot be printed. Thus, there is a difficulty in managing received SMS short messages.

An apparatus having a printing function, according to the present invention, is characterised by means for receiving SMS messages, the control means being configured to cause printing of received SMS messages by means of the printing means.

Preferably, the means for receiving SMS messages is configured to receive SMS messages across a wired network.

Preferably, the apparatus comprises storage means for storing received SMS messages.

Preferably, the apparatus comprises display means for displaying received SMS messages.

Embodiments of the present invention will now be described, by way of example, with reference to the accompanying drawings, in which:
Figure 1 illustrates the structure of an embodiment of a short message service (SMS) system on a local wired network according to the present invention;
Figure 2A illustrates the structure of SMS protocol layers for a wired network, employed in the present invention;
Figure 2B illustrates the format of an SMS multiple data message (MDMF) used in the data link layer of the SMS protocol layers of Figure 2A;
Figure 3 is a flowchart showing a first embodiment of a method of managing SMS messages in a facsimile machine or a multifunctional device (MFP) having a short message service (SMS) function, according to the present invention;
Figures 4A and 4B are flowcharts showing a second embodiment of a method of managing SMS messages in a facsimile machine or a multifunctional device (MFP) having a short message service (SMS) function, according to the present invention; and
Figure 5 is a flowchart showing a third embodiment of a method of managing SMS messages in a facsimile machine or a multifunctional device (MFP) having a short message service (SMS) function, according to the present invention.

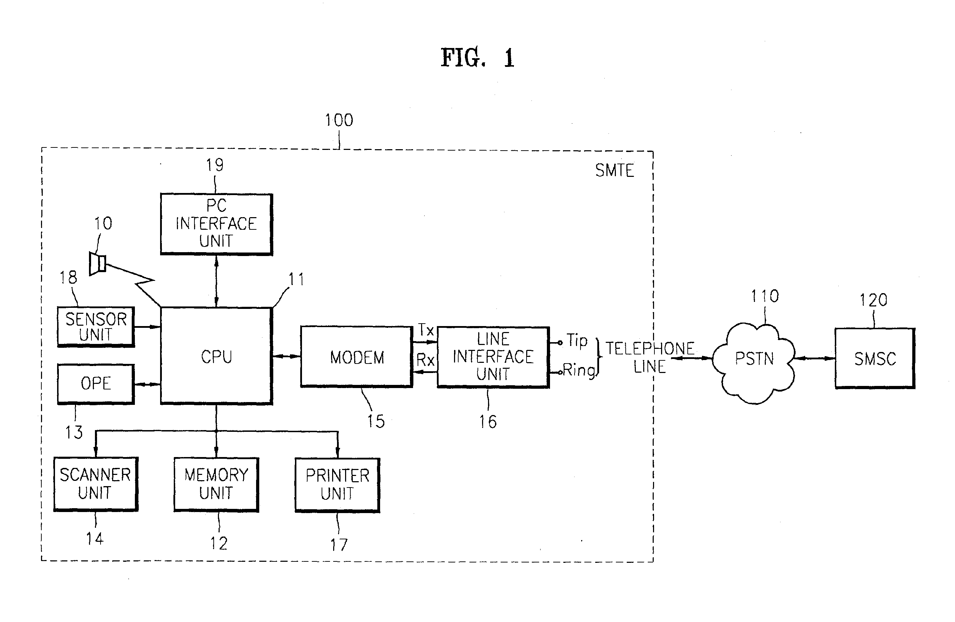

Referring to Figure 1, the SMS system comprises a facsimile machine 100, which is an example of an SMS terminal (SMTE), a public switched telephone network (PSTN) 110, which is a wired network including an exchange station, and a short message service centre (SMSC) 120.

Typically, the facsimile machine 100 comprises a speaker 10, a central processing unit (CPU) 11, a memory unit 12, an operation panel 13 (OPE), a scanner unit 14, a modem 15, a line interface unit 16, a printer unit 17, a sensor unit 18 and a PC interface unit 19. Furthermore, the facsimile machine 100 is configured for operation in accordance with ES 201 912.

The speaker 10 outputs status information relating to the status of the CPU 11 or an alarm in response to a control signal corresponding to the alarm. The CPU 11 controls the SMS system according to a predetermined program. The memory 12 stores program data, protocol data and character data, and accesses or stores data according to a control given by the CPU 11. The OPE 13 comprises a plurality of keys by means of which data for controlling SMS operation can be generated, for example the keys which are relevant to SMS operation, which provide control data signals to the CPU 11 for processing. The OPE 13 further comprises a display window on which data from the CPU 11 can be displayed. The scanner unit 14 scans a manuscript, converts an image of the manuscript into digital image data, and provides the digital image data to the CPU 11. The modem 15 modulates a signal output from the CPU 11 into an analogue signal, outputs the analogue signal, demodulates an analogue input signal, and outputs the analogue input signal to the CPU 11, according to a control given by the CPU 11. The line interface unit 16 operates according to a control given by the CPU 11, forms a calling loop for the PSTN 110, interfaces the modem 15 with a signal output from the PSTN 110, and interfaces signals output from the modem 15 to the PSTN 110. The printer unit 17 prints scan data or received data stored in the memory unit 12 according to a control given by the CPU 11. The sensor unit 18 senses the remaining amount of a recording sheet or a manuscript and provides the sensed remaining amount of the recording sheet or the manuscript to the CPU 11. The PC interface unit 19 interfaces with a PC to perform a printing or a scanning operation.

The above-described elements are typical, and similar to the elements of a common facsimile machine. Since, typically, SMS messages are only transmitted via the PSTN 110 with a 1200 baud frequency shift keying (FSK) modulation, the transmission speed of the modem 15 has to be over 1200 bits per second (bps). In addition, typically, an SMS program is stored in the memory unit 12 and if a key indicative of an SMS reception and transmission is input into the OPE 13, the CPU 11 accesses the SMS program stored in the memory unit 12 to confirm received SMS messages or to write and send SMS messages. In addition, the facsimile machine 100 is connected to an exchange station (not shown) via the PSTN 110, and the exchange station is connected to the SMSC 120. The SMSC 120 provides the short message service (SMS), such as message reception, message management and message transmission.

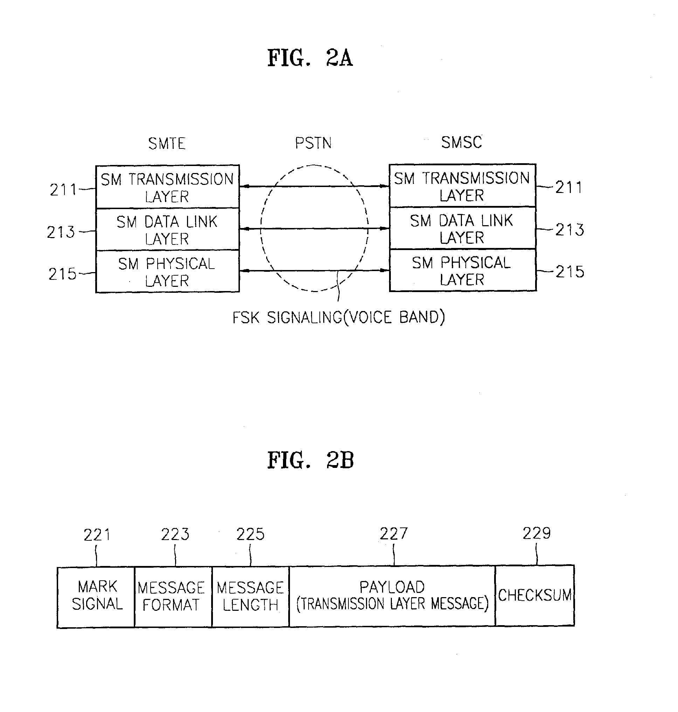

Referring to Figure 2A, the SMS protocol layers on a wired network, e.g. ES 201 912, comprise an SMS transmission layer 211, an SM data link layer 213 and an SM physical layer 215. The SMS transmission layer 211 defines various messages and parameters for short message transmission/reception, the SM data link layer 213 defines mark signals and checksums for reliable transmission/reception between the SMTE (e.g., the facsimile machine 100) and the SMSC 120, and the SM physical layer 215 defines 1200 baud FSK modulation at a voice band.

Referring to Figure 2B, a mark signal 221 used to prepare for the reception of a message frame, a message format word 223 and a message length word 225, with which connected messages can be confirmed, are added to the front end of a payload word 227 (a transmission layer message), and a checksum word 229, used for error detection, is added to a rear end of the payload word 227, thereby generating a message frame on the SM data link layer 213. The transmission layer message 227 comprises a time parameter, a receiver parameter, a password parameter, a circuit number parameter, and an SMS message parameter (not shown). Each parameter comprises a parameter type, a parameter length, and one or more parameter words.

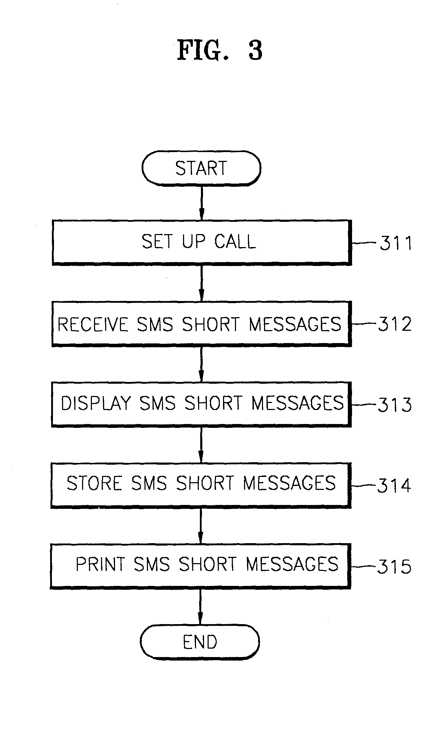

Referring to Figure 3, the first embodiment of a method for managing SMS messages comprises, setting up a call at operation 311, receiving SMS messages at operation 312, displaying the SMS messages at operation 313, storing the SMS messages at operation 314 and printing the SMS messages at operation 315.

The above-described method of managing SMS messages, as shown in Figure 3, will now be described in association with the SMS system shown in Figure 1. In operation 311, the SMSC 120 receives SMS messages transmitted from a transmitter SMS terminal (not shown) to which a call is set up via the PSTN 110, and the SMSC 120 stores the SMS messages. After that, the SMSC 120 sets up a call to a receiver SMS terminal 100 designated by the transmitter SMS terminal. Here, a facsimile machine, a multifunctional device (MFP), or a telephone machine having an SMS function may be used as a transmitter SMS terminal, and a facsimile machine or a MFP having an SMS function and a printing function may be used as the receiver SMS terminal 100.

In operation 312, the receiver SMS terminal 100 interprets a calling party number received from the SMSC 120, identifies a call for receiving SMS messages from an SMSC number contained in the calling party number, and receives the SMS messages via the modem 15. In this case, at least one or more SMSC numbers are recorded in the memory unit 12. Thus, if the SMSC number included in the calling party number exists in the SMSC numbers recorded in the memory unit 12, the receiver SMS terminal 100 can identify the call for receiving SMS messages.

In operation 313, the receiver SMS terminal 100 displays the received SMS messages on a display window of the OPE 13, and in operation 314, the receiver SMS terminal 100 stores the SMS messages in a predetermined address of the memory unit 12 by tabling a sequence and the contents of the messages. In operation 315, if storage of the SMS messages is completed in operation 314, the receiver SMS terminal 100 automatically prints the SMS messages received in operation 312 via the printer unit 17. In a variant of the first embodiment, operation 314 may be selectively performed after operation 313 or 315. If operation 314 is not performed after operation 313 or 315, in operation 313, the receiver SMS terminal 100 displays the received SMS messages on the display window of the OPE 13 for a predetermined amount of time, and in operation 315, the receiver SMS terminal 100 automatically prints the SMS messages received in operation 312 via the printer unit 17. In another variant of the first embodiment, operation 313 may be selectively performed. If operation 313 is not performed, in operations 314 and 315, the receiver SMS terminal 100 stores the SMS messages received in operation 312 in the predetermined address of the memory unit 12 and automatically prints the SMS messages via the printer unit 17, or in operation 315, the receiver SMS terminal 100 automatically prints the SMS messages received in operation 312 via the printer unit 17 without storing the SMS messages in operation 314.

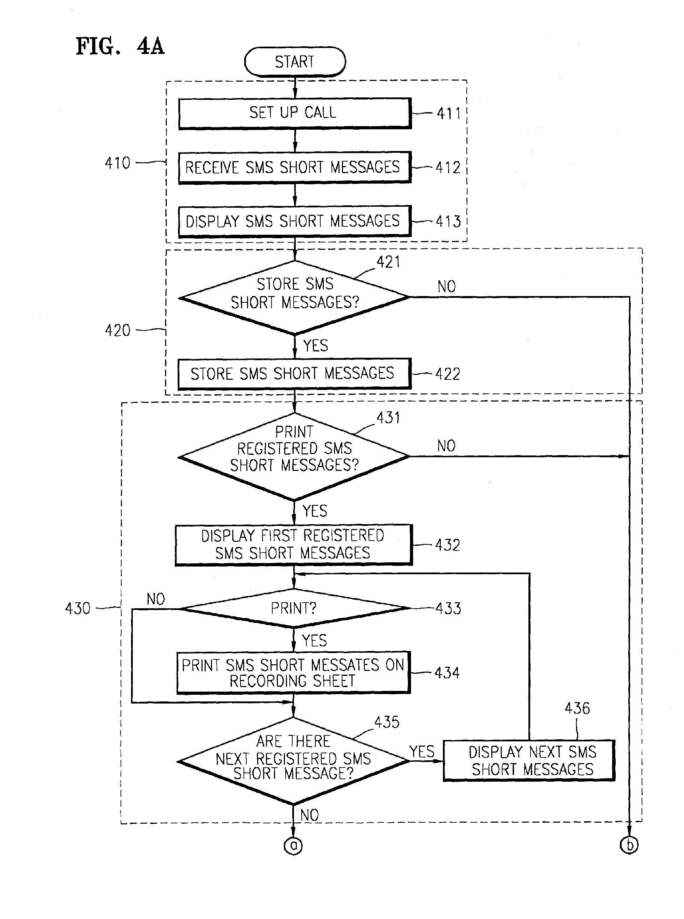

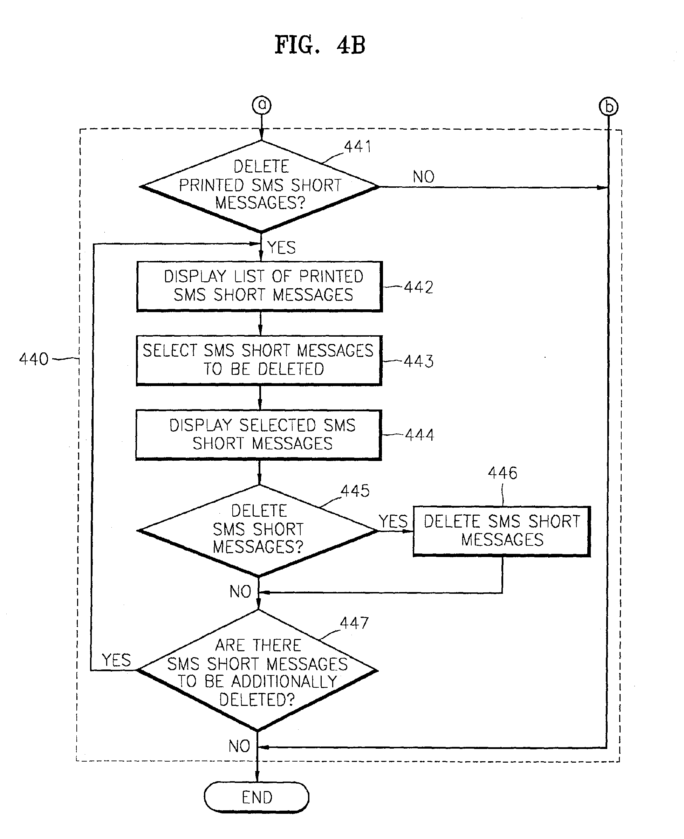

The above-described method, as shown in Figure 3, may further comprise deleting the SMS messages printed in operation 315 automatically or according to a user selection. Referring to Figures 4A and 4B, the second embodiment of a method for managing SMS messages comprises, receiving SMS messages at operation 410, storing the SMS messages at operation 420, printing the SMS messages at operation 430 and deleting the SMS messages at operation 440.

The above-described method of managing SMS messages, as shown in Figures 4A and 4B, will now be described in association with the SMS system shown in Figure 1. In Figure 4A, operations 411 to 413 of receiving SMS messages (i.e. operation 410) are the same as operations 311 to 313 described in the first embodiment, as shown in Figure 3, therefore, descriptions thereof will be omitted.

As a part of storing the SMS messages in operation 420, in operation 421 it is determined whether to store the SMS messages displayed in operation 413. When, at operation 421, a key indicative of a storage instruction is pressed on the OPE 13 then, according to the user's selection, a sequence and the contents of the SMS messages are tabled and stored in a predetermined address of the memory unit 12 in operation 422. Alternatively, in operation 421, when the user determines that the displayed SMS messages are unnecessary and decides not to store the displayed SMS messages in the memory unit 12, the above-described SMS message processing is terminated (i.e. the displayed SMS messages are discarded). Accordingly, when the SMS messages are received and displayed, it is determined whether to store the SMS messages, and when it is determined not to store the SMS messages, the SMS message processing is terminated. When it is determined to store the received SMS messages, a printing operation may be performed on desired SMS messages and then SMS messages may be selectively deleted.

As a part of printing the SMS messages in operation 430, in operation 431 it is determined whether to print the SMS messages stored and registered in the memory unit 12. When, at operation 431, a key indicative of printing instruction is pressed on the OPE 13 then, according to the user's selection, in operation 432, the contents of the first SMS messages stored in an ascending or a descending order in the memory unit 12 are displayed on a display window of the OPE 13.
Alternatively, in operation 431, when the user decides not to print the stored SMS messages, the SMS message processing is terminated.

In operation 433, it is determined whether to print any of the displayed SMS messages. When, at operation 433, a key indicative of a printing instruction is pressed on the OPE 13 then, according to the user's selection, in operation 434, the printer unit 17 is controlled and printing of the SMS messages is performed on a predetermined recording sheet. Alternatively, at operation 433, when the user decides not to print the displayed SMS messages, the method proceeds to operation 435. In operation 435, it is determined whether there are more SMS messages stored and registered in the memory unit 12. When it is determined, in operation 435, that there are more SMS messages stored and registered in the memory unit 12, the next SMS message is displayed on the display window of the OPE 13, and the method returns to operation 433 to repeat operation 433 and subsequent operations related to printing the next SMS message. Alternatively, when it is determined, in operation 435, that there are no more SMS messages stored and registered in the memory unit 12, the method proceeds to operation 440 of deleting the SMS messages, which is to be additionally performed.

Operation 440 of deleting the SMS messages may be performed by deleting the SMS messages printed in operation 430 or by deleting the SMS messages stored and registered in operation 420 but not printed at operation 430 (not shown in Figure 4A), so as to minimise an area occupied by the SMS messages in the memory unit 12. Here, the former case will be described. In operation 441, it is determined whether to delete the printed SMS messages. When it is determined, in operation 441, to delete the printed SMS messages, in operation 442, a list of the printed SMS messages is displayed on the display window of the OPE 13. In operation 443, the user selects SMS messages to be deleted from the list of the displayed SMS messages, and in operation 444, the selected SMS messages are displayed on the display window of the OPE 13. Alternatively, at operation 441, when the user decides not to delete the printed SMS messages, the above-described SMS short message processing is terminated.

In operation 445, it is determined whether to delete the displayed SMS messages. When, at operation 445, a key indicative of a deletion instruction is pressed on the OPE 13 then, according to the user's selection, the SMS messages are deleted in operation 446. When, at operation 445, the user decides not to delete the SMS messages, it is determined whether there are additional SMS messages to be deleted, in operation 447. When, at operation 447, it is determined that there are additional SMS messages to be deleted, the method returns to operation 442 to repeat operation 442 and subsequent operations, and when, at operation 447, it is determined that there are no additional SMS messages to be deleted, the above-described SMS message processing is terminated.

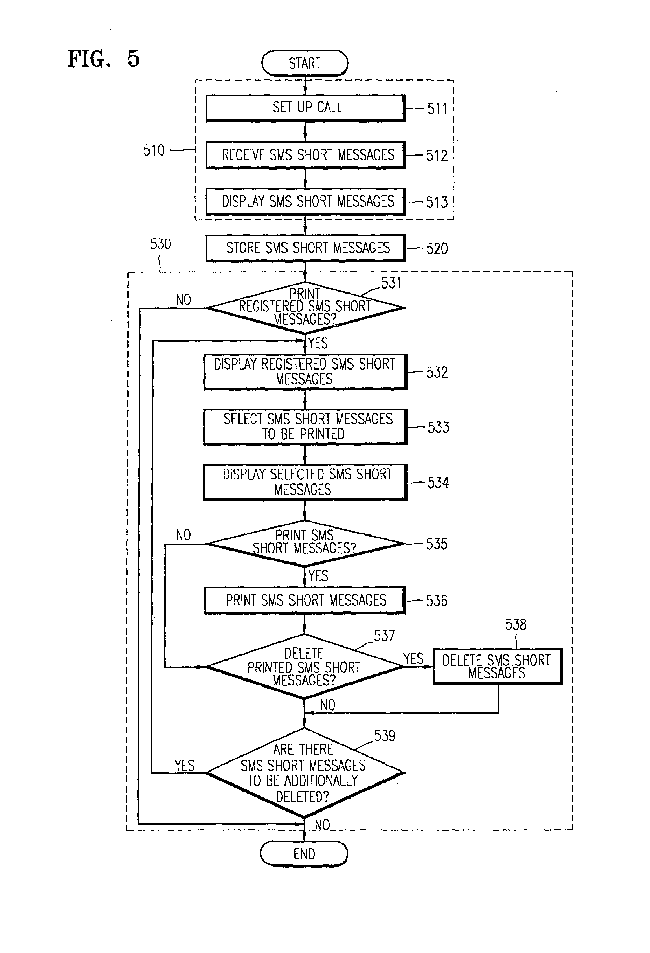

Referring to Figure 5, the third embodiment of a method of managing SMS messages comprises, receiving SMS messages at operation 510, storing the SMS messages at operation 520 and printing the SMS messages at operation 530.

The above-described method of managing SMS messages, as shown in Figure 5, will now be described in association with the SMS system shown in Figure 1. Like the second embodiment, operations 511 to 513 of receiving and displaying SMS messages are the same as operations 311 to 313 described in the first embodiment of Figure 3, and therefore, descriptions thereof will be omitted.

In operation 520 of storing the SMS messages, the displayed SMS messages are stored in a predetermined address of the memory unit 12 by tabling a sequence and the contents of the SMS messages. In a variant of the third embodiment, operation 520 of storing the SMS messages may further comprise determining whether to store the SMS messages like in the second embodiment and may be performed by storing the SMS messages in the memory unit 12 according to the user's selection or by displaying the SMS messages and then discarding the SMS messages. That is, like in the second embodiment, when the SMS messages are received and displayed, it is determined whether to store the SMS messages. When it is decided not to store the SMS messages, the above-described SMS short message processing is terminated (i.e. the displayed SMS messages are discarded). Alternatively, when it is determined to store the received SMS messages, the received SMS messages are displayed and stored, and a printing operation may be performed on desired stored SMS messages. After printing, the SMS messages may be selectively deleted.

As a part of printing the SMS messages in operation 530, in operation 531 it is determined whether to print the SMS messages stored and registered in the memory unit 12. When, at operation 531, a key indicative of a printing instruction is pressed on the OPE 13 then, according to the user's selectiona list of the SMS messages stored and registered in the memory unit 12 is displayed on a display window of the OPE 13, in operation 532. Alternatively, at operation 531, when the user decides not to print the stored SMS messages, the above-described SMS short message processing is terminated.

In operation 533, the user selects SMS messages to be printed from the list of the displayed SMS messages. In operation 534, the selected SMS messages are displayed on the display window of the OPE 13. In operation 535, it is determined whether to print the displayed SMS messages. When, at operation 535, a key indicative of a printing instruction is pressed on the OPE 13 then, according to the user's selection, in operation 536, the printer unit 17 is controlled and printing of the SMS messages is performed on a predetermined recording sheet. Alternatively, at operation 535, when the user decides not to print the displayed SMS messages, the method proceeds to operation 537 of deleting the SMS messages, which is to be additionally performed.

In operation 537, it is determined whether to delete the SMS messages printed in operation 536. When, at operation 537, a key indicative of a deletion instruction is pressed on the OPE 13 then, according to the user's selection, in operation 538, the SMS messages are deleted. When, at operation 537, the user decides not to delete the printed SMS messages, the method proceeds to operation 539. In operation 539, it is determined whether there are additional SMS messages to be printed. When it is determined, in operation 539, that there are additional SMS messages to be printed, the method returns to operation 532. When it is determined, in operation 539, that there are no additional SMS messages to be printed, the above-described SMS message processing is terminated.

Typically, the above-mentioned embodiments of the present invention may be implemented as a computer program. The program is stored in computer readable media and is read and executed by a computer (i.e. the CPU 11). More particularly, the processes of invention as implemented in software are embodied in a computing apparatus, such as computer, facsimile machine, a multifunction device, printer, etc. Suitable computer readable media include magnetic recording media, such as ROMs, floppy disks or hard disks, optical recording media, such as CD ROMs or DVDs, and carrier waves, such as transmission via the Internet.

As described above, according to the present invention, when SMS messages-are received from an SMS centre (SMSC) via a transmitter SMS terminal (SMTE) in a facsimile machine or a multifunctional device (MFP) having a short message service (SMS) function, the SMS messages are displayed on a display window, automatically stored and printed, and thus can be managed in a document format, so a user can manage the SMS messages conveniently.

In an embodiment of the invention, when SMS messages are received from an SMS centre (SMSC) via a transmitter SMS terminal (SMTE) in a facsimile machine or a multifunctional device (MFP) having a short message service (SMS) function, the SMS messages are displayed on a display window, whether the SMS messages are stored is determined, whether the stored and registered SMS messages are printed in the order of a descending series or an ascending series is sequentially determined, and the SMS messages are printed. In another embodiment of the invention, it is determined whether to delete the printed SMS messages, and the SMS messages are deleted, such that an area occupied by the SMS messages in the memory unit can be minimised, and a waste of resources can be eliminated and the user can manage the SMS messages conveniently.

Therefore, a SMS message printing apparatus, comprising a programmed computer processor setting up a call to a short message service centre, receiving SMS messages from the short message service centre, via a modem, and printing the received SMS messages, so that the SMS messages can be managed in a document format, is provided. Further, the programmed computer processor displays the received SMS messages on a display window, and allows selective storage, print, and deletion of the received SMS messages via input commands.

## Claims

1. An apparatus having a printing function comprising control means (11) and printing means (17), **characterised by** means (16) for receiving SMS messages, the control means (11) being configured to cause printing of received SMS messages by means of the printing means (17).

2. An apparatus according to claim 1, wherein the means (16) for receiving SMS messages is configured to receive SMS messages across a wired network (110).

3. An apparatus according to claim 1 or 2, comprising storage means (12) for storing received SMS messages.

4. An apparatus according to claim 1, 2 or 3, comprising display means (13) for displaying received SMS messages.

5. A method of managing short messages in a facsimile machine or a multifunctional device having a short message service, the method comprising:
setting up a call to a short message service (SMS) center;
receiving the SMS short messages from the short message service center, via a modem; and
printing the received SMS short messages.

6. The method of claim 5, further comprising displaying the received SMS short messages on an operation panel before the printing.

7. The method of claim 5, further comprising storing the received SMS short messages in a predetermined memory region according to a user selection or automatically before the printing.

8. The method of claim 6, further comprising storing the displayed SMS short messages in a predetermined memory region according to a user selection or automatically before the printing.

9. The method of claim 5, further comprising storing the printed SMS short messages in a predetermined memory region according to a user selection or automatically after the printing.

10. The method of claim 6, further comprising storing the printed SMS short messages in a predetermined memory region according to a user selection or automatically after the printing.

11. The method of claim 7, further comprising deleting the printed SMS short messages according to a user selection.

12. The method of claim 8, further comprising deleting the printed SMS short messages according to a user selection.

13. The method of claim 9, further comprising deleting the printed SMS short messages according to a user selection.

14. The method of claim 10, further comprising deleting the printed SMS short messages according to a user selection.

15. The method of claim 7, wherein the printing comprises:
determining whether to print the stored SMS short messages; and
if determined to print the stored SMS short messages, printing the stored SMS short messages.

16. The method of claim 7, wherein the printing comprises:
determining whether to print the stored SMS short messages;
if determined to print the stored SMS short messages, displaying a list of the stored SMS short messages; and
printing the stored SMS short messages selected by a user from the displayed list of the SMS short messages.

17. A method of managing short messages in a facsimile machine or a multifunctional device having a short message service, the method comprising:
setting up a call to a short message service (SMS) center;
receiving the SMS short messages from the short message service center, via a modem;
displaying the received SMS short messages on an operation panel;
storing the received SMS short messages in a predetermined memory region; and
printing the stored SMS short messages.

18. The method of claim 17, wherein the printing comprises:
determining whether to print the stored SMS short messages; and
if determined to print the SMS short messages, printing the stored SMS short messages.

19. The method of claim 17, wherein printing comprises:
determining whether to print the stored SMS short messages;
if determined to print the stored SMS short messages, displaying a list of the stored SMS short messages; and
printing short messages selected by a user from the displayed list of the SMS short messages.

20. The method of claim 17, further comprising deleting the stored printed SMS short messages according to a user selection.

21. The method of claim 18, further comprising deleting the stored printed SMS short messages according to a user selection.

22. The method of claim 19, further comprising deleting the stored printed SMS short messages according to the user selection.

23. A computer readable recording medium storing a program controlling a computer according to the method of claim 5.

24. A computer readable recording medium storing a program controlling a computer according to the method of claim 17.

25. A short message service (SMS) printing apparatus, comprising a programmed computer processor setting up a call to the SMS, receiving short messages from the SMS, and printing the received SMS short messages.

26. The apparatus of claim 25, wherein the programmed computer processor provides the received SMS short messages, and allows selective storage, print, and deletion of the received SMS short messages via input commands.

27. A short message service (SMS) printing apparatus, comprising:
an SMS interface receiving short messages from the SMS; and
a printer automatically printing the received SMS short messages.

28. The apparatus of claim 27, further comprising:
a display unit displaying the received SMS short messages; and
an input unit receiving a user selection to print a displayed SMS short message by the printer.

29. The apparatus of claim 28, wherein the display unit displays the SMS short messages in an ascending or a descending order, and the input unit sequentially receives the user selection to print the displayed SMS short messages.

30. The apparatus of claim 28, further comprising:
a storage storing the received SMS short messages, wherein the input unit receives another user selection to delete the printed SMS short message from the storage.

31. A printing device having a short message service (SMS) function, comprising:
a programmed computer processor setting up a call to an SMS center, receiving and storing SMS short messages from the SMS center, selectably providing the received SMS short messages, and printing the SMS messages according to a selection to allow managing the received SMS short messages in a document format.

32. A method, comprising:
managing received short message service (SMS) short messages in a document format by selectively printing the received SMS messages.
